(19) Europäisches Patentamt
European Patent Office
Office européen des brevets

(11) Veröffentlichungsnummer: **0 083 017**
**B1**

# (12) EUROPÄISCHE PATENTSCHRIFT

(45) Veröffentlichungstag der Patentschrift: **29.05.85**

(51) Int. Cl.⁴: **B 32 B 17/10,** C 03 C 27/12, C 09 J 3/16, C 08 G 18/48

(21) Anmeldenummer: **82111534.2**

(22) Anmeldetag: **13.12.82**

(54) **Verbundscheiben mit Polyurethan-Zwischenschicht.**

(30) Priorität: **24.12.81 DE 3151375**

(43) Veröffentlichungstag der Anmeldung: **06.07.83 Patentblatt 83/27**

(45) Bekanntmachung des Hinweises auf die Patenterteilung: **29.05.85 Patentblatt 85/22**

(84) Benannte Vertragsstaaten: **BE DE FR GB IT**

(56) Entgegenhaltungen:
**DE - A - 1 928 092**
**FR - A - 2 226 453**
**GB - A - 1 146 539**
**US - A - 4 137 276**

(73) Patentinhaber: **BAYER AG, Konzernverwaltung RP Patentabteilung, D-5090 Leverkusen 1 Bayerwerk (DE)**

(72) Erfinder: **Wegner, Christian, Dr., Roggendorfstrasse 65, D-5000 Köln 80 (DE)**

**EP 0 083 017 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Verbundscheiben aus mindestens zwei Glas- und/oder Kunststoffscheiben, die durch eine Zwischenschicht aus einem selbsthärtenden, zinnkatalysierten Zweikomponenten-Polyurethangießharz auf der Basis mindestens trifunktioneller Polyoxyalkylenpolyether und (cyclo)aliphatischen Diisocyanaten verbunden sind.

Ein geeignetes Verfahren zum Aufbau von Verbundsicherheitsscheiben, insbesondere von einbruchshemmenden und schalldämmenden Scheiben, besteht darin, daß zwischen zwei Scheiben eine Masse gegossen wird, die anschließend, gegebenenfalls durch thermische Einwirkung, gehärtet wird. Gut geeignet für diesen Zweck sind Polyurethansysteme, welche aus lichtechten Di- und Polyisocyanaten und klaren, farblosen OH- und/oder NH-Komponenten aufgebaut sind.

Für den praktischen Einsatz solcher Systeme sind folgende Punkte wesentlich:

— niedrigviskose, nicht-kristallisierende Ausgangskomponenten,
— Aushärtung bei Temperaturen bis zu max. 50°C, bevorzugt bei Raumtemperatur,
— Beendigung des Aushärtevorgangs innerhalb möglichst geringer Zeit, bevorzugt in weniger als 12 Stunden,
— gute mechanische Eigenschaften der ausgehärteten Zwischenschicht über einen großen Temperaturbereich, wie z. B. Verbundhaftung, Elastizität und Festigkeit bei mechanischer Beanspruchung, wie z. B. starken Schlägen,
— einfacher Aufbau der Gießmischung, d. h. die Gießmischung sollte neben dem Katalysator aus möglichst wenig, bevorzugt nur aus zwei Einzelkomponenten, bestehen,
— möglichst geringer Anteil der teuren Isocyanatkomponente in der Mischung.

Verbundglasscheiben aus gießfähigen Polyurethansystemen sind zwar beschrieben, haben bislang jedoch keinen breiten Eingang in die Praxis gefunden, da diese Systeme nicht in allen Punkten den Anforderungen entsprechen.

Der Stand der Technik auf diesem Gebiet wird durch die DE-A-3 032 211 und die US-A-4 131 605 und 4 131 606 wiedergegeben. Die in der De-A-3 032 211 beschriebenen Polyurethankompositionen sind dadurch gekennzeichnet, daß das Verhältnis von NCO- zu OH-Gruppen 0,2 bis 0,6 beträgt. Es sind somit niedrigviskose, aus nur zwei Einzelkomponenten unter Verwendung von wenig Isocyanat aufgebaute Gießmischungen herstellbar, nach Aushärtung weisen jedoch solche Zwischenschichten aufgrund der zwischen 0,2 und 0,6 liegenden Kennzahl schlechte mechanische Werte bezüglich Reiß- und Schlagfestigkeit und Elastizität auf. Dies ist darin begründet, daß es sich nach Aushärtung mehr um viskoelastische Substanzen mit gelartigen Eigenschaften denn um ein voll vernetztes Polyurethan handelt. Die Mischungen werden daher richtigerweise nicht als Polyurethane, sondern als »polyurethanhaltige Polyole« bezeichnet.

Voll vernetzte Polyurethane werden in der US-A-4 131 605 beschrieben. Die dort beschriebenen Zwischenschichten weisen im allgemeinen gute mechanische Eigenschaften und eine befriedigende Verarbeitungsviskosität auf, die Mischungen jedoch bestehen neben dem Katalysator immer noch aus drei Einzelkomponenten, nämlich dem Diisocyanat, einem Vernetzermolekül mit mindestens drei OH-Gruppen und einem linearen, unverzweigten, durch Polymerisation von Tetrahydrofuran hergestelltem Polyetherdiol. Nachteilig ist weiterhin die relativ hohe benötigte Menge an Diisocyanat, die im Bereich von 25 bis 30 Gew.-% liegt und auch die relativ lange Aushärtungszeit. So nimmt eine vollständige Aushärtung bei Raumtemperatur ca. 14 Tage in Anspruch.

Die US-A-4 131 606 offenbart zwar nur aus zwei Einzelkomponenten bestehende Mischungen, nämlich Caprolactontriole und cycloaliphatische Diisocyanate, neben der hohen Viskosität der Polycaprolactontriole sind auch hier die hohen, teilweise über 30% liegenden Isocyanatanteile nachteilig.

Bei der Verwendung der in der US-A-4 131 606 beschriebenen Polycaprolactontriole werden außerdem hohe Vernetzungsdichten erreicht, so daß keine Zwischenschichten der notwendigen Elastizität und Weichheit erhalten werden. Es wird daher die zusätzliche Verwendung von Polycaprolactondiolen vorgeschlagen, was jedoch wiederum dazu führt, daß drei Einzelkomponenten einzusetzen sind, zumal auch in diesen Fällen der benötigte Isocyanatgehalt noch im Bereich von 30 Gew.-% liegt. Ebenfalls nachteilig bei diesen Systemen ist auch die lange, d. h. zweiwöchige Aushärtezeit, sowie ihre Kristallisations- und Tieftemperaturverhärtungs-Tendenz.

In der nicht vorveröffentlichten Patentanmeldung DE-A-3 135 672 sind für die Herstellung von Verbundscheiben Systeme aus cycloaliphatischen Diisocyanaten und einem Gemisch aus einem di- und einem trifunktionellen Polyether vorgeschlagen worden. Die Gemische zeichnen sich durch sehr niedrige Verarbeitungsviskositäten aus, weisen aber auch den Nachteil auf, daß sie aus drei Einzelkomponenten bestehen. Nachteilig ist ferner bei solchen Systemen, daß sie, wenn Zwischenschichten einer Shore-A-Härte von >30 innerhalb weniger Stunden bei Raumtemperatur erhalten werden sollen, aufgrund der erforderlichen hohen Katalysatorkonzentration und der niedrigen Ausgangsviskosität zur Schlierenbildung neigen.

Es würde daher einen technischen Fortschritt bedeuten, wenn es gelänge, ein Polyurethansystem zu finden, welches folgende Vorteile in sich vereinigte:

- bestehend aus nur zwei Einzelkomponenten,
- zur vollständigen Vernetzung benötigte Menge an Diisocyanat <20, bevorzugt <15 Gew.-%,
- niedrige Verarbeitungsviskosität,
- erreichbare Shore-A-Härten ≤60 bei gleichzeitigen guten mechanischen Eigenschaften über einen großen Temperaturbereich,
- schnelle schlierenfreie Härtbarkeit bei Raumtemperatur innerhalb weniger Stunden.

Es wurde nun gefunden, daß alle Anforderungen an eine gießbare Polyurethanzwischenschicht erfüllt werden können, wenn Gemische verwendet werden, welche aus einem (cyclo)aliphatischen Diisocyanat und einem aus vorwiegend Oxypropylen-Einheiten aufgebauten Polyether mit mindestens drei OH-Gruppen eines Molekulargewichts zwischen 2000 und 14 000 bestehen.

Gegenstand der vorliegenden Erfindung sind also aus mindestens zwei Glas- und/oder Kunststoffscheiben aufgebaute Verbundscheiben mit einer vergießbaren und bei Raumtemperatur härtbaren Polyurethanzwischenschicht, dadurch gekennzeichnet, daß die Polyurethanzwischenschicht aus dem Reaktionsprodukt aus

a) einem aliphatischen oder cycloaliphatischen Diisocyanat und
b) einem im wesentlichen aus Oxypropylen-Einheiten aufgebauten Polyoxyalkylenether eines Molekulargewichts von 2000 bis 14 000 mit 3 bis 8 Hydroxylgruppen/Molekül, welche gegebenenfalls bis zu 30 Gew.-% Oxyethylen-Einheiten enthalten kann,

wobei das NCO/OH-Verhältnis 0,8 bis 1,3 beträgt und Zinnverbindungen als Katalysatoren verwendet werden, besteht.

Der Einsatz der polyurethanbildenden Mischung zur Herstellung der erfindungsgemäßen Verbundscheiben kann nach der one-shot-Methode durch Vermischen der Einzelkomponenten, anschließendem Vergießen und Aushärten erfolgen. Möglich ist es auch, das (cyclo)aliphatische Diisocyanat a) mit unterschüssigen Mengen des Polyethers b) in ein NCO-gruppenhaltiges Prepolymeres umzuwandeln und dieses dann mit dem Polyether b) zu versetzen.

Als (cyclo)aliphatische Diisocyanate werden Isophorondiisocyanat (IPDI), Hexamethylendiisocyanat, Trimethylhexamethylendiisocyanat, die Dicyclohexylmethandiisocyanate als 4,4'- und/oder 2,2'-Isomere oder ihre Isomerengemische bzw. Konformerengemische (Stereoisomerengemische) bevorzugt eingesetzt, besonders bevorzugt sind das Isophorondiisocyanat und das Hexamethylendiisocyanat. Weiterhin sind auch Mono- bis Tetra-$C_1-C_4$-alkyl-Derivate der Dicyclohexylmethandiisocyanate verwendbar, z. B. das 3,3'-Dimethyl-dicyclohexylmethan-4,4'-diisocyanat, ferner Lysin-alkylester-diisocyanat, 3(4), 8(9)-Diisocyanatomethyl-tricyclo[5,2,1,$0^{2,6}$]-decan und 1-Isocyanato-2-isocyanatomethyl-3,3,5 (und/oder 3,5,5)-trimethylcyclopentan.

Es können auch in geringen Mengen (bis 10 Mol-%) an aliphatischen Triisocyanaten mit verwendet werden, z. B. das Biurettriisocyanat des Hexamethylendiisocyanats oder des Isophorondiisocyanates oder Triisocyanate wie 1,8-Diisocyanato-4-isocyanatomethyl-octan, doch ist diese Ausführungsform weniger bevorzugt.

Die Polyether b) sind Polyoxyalkylen-Polyether (Propylenoxid-polyether) eines Molekulargewichtsbereiches von 2000 bis 14 000, bevorzugt im Molekulargewichtsbereich 3000 bis 14 000, mit 3 bis 8 OH-Gruppen pro Molekül. Beispiele für Komponente b) sind auf Trimethylolpropan, Glycerin, Pentaerythrit, Sorbit oder Zukkern oder auf Diaminen gestartete Polyether des genannten Molekulargewichtsbereichs, wobei als Alkylenoxide vorzugsweise Propylenoxid, gegebenenfalls mit bis zu 30 Gew.-% Ethylenoxid eingesetzt werden. Bei den Oxypropylenpolyethern b) kommen auch solche in Frage, bei denen in statistischer oder segmentartiger Anordnung bis zu 30%, bevorzugt bis zu 15%, der Oxypropylen-Einheiten

$$\left(-CH_2-\underset{\displaystyle CH_3}{\underset{|}{C}H}-\text{O-Einheiten}\right)$$

durch Oxyethyleneinheiten ($-CH_2 \cdot CH_2 \cdot$ O-Einheiten) ersetzt sind.

Die Härte der Gießsysteme kann in einfacher Weise u. a. durch die Wahl des Molekulargewichtsbereichs der Polyether b) eingestellt werden. Bei Molekulargewichten im Bereich von 2000 bis 6000 sind etwa trifunktionelle Ether b) bevorzugt. Polyether mit Funktionalitäten deutlich oberhalb von 3 werden bevorzugt in einem Molekulargewichtsbereich von 6000 bis 14 000 eingesetzt.

Das NCO/OH-Verhältnis a) : b) beträgt etwa 0,8 : 1 bis 1,3 : 1, vorzugsweise 0,9 : 1 bis 1,2 : 1.

Die zu einer vollständigen Vernetzung der vorzugsweise verwendeten, höhermolekularen und mindestens trifunktionellen Polyether (Molekulargewichte ≥3000, Funktionalitäten ≥3) notwendige Menge an Diisocyanat a) liegt dann unter 20 Gew.-%, meistens sogar unter 15 Gew.-%.

Als Katalysatoren werden zinnorganische Katalysatoren wie Zinn-II-dialkanoate wie z. B. Zinn-II-diacetat oder Zinn-II-octoat und/oder Dialkyl-Zinn-IV-dilaurat eingesetzt. Diese Katalysatoren sollen so dosiert werden, daß eine Topfzeit von mindestens einer Stunde bei Temperaturen von 25 bis 50°C möglich ist, wenn man Topf-Gieß-Systeme verwendet, wo die Scheiben von Hand aus einem vorgegebenen Vorrat der Mischung gegossen werden. Man verwendet etwa 0,05 bis 2,5 Gew.-%, vorzugsweise 0,05 bis 1 Gew.-% an zinnorganischen Katalysatoren. Für Handgießsysteme werden dabei vorzugsweise weniger aktivierte Systeme mit 0,005 bis 0,25 Gew.-% zinnorganischen Katalysatoren eingesetzt, während man bei Maschinengießsystemen

mit maschineller Dosierung der Einzelkomponenten höherkatalysierte, schneller reagierende Systeme mit gegebenenfalls sehr kurzer Topfzeit verwendet. Hierzu werden in etwa 0,01 bis 1,0 Gew.-% an zinnorganischen Katalysatoren verwendet. Ein besonders bevorzugter Katalysator ist Zinn-II-octoat.

Die Shore-A-Härten der Polyurethanzwischenschichten bewegen sich in Bereichen von 5 bis 60, vorzugsweise 10 bis 45, wobei Polyether mit höherem Molekulargewicht im allgemeinen weichere Zwischenschichten ergeben als mit niederem.

Bevorzugte transparente Materialien für den Aufbau der Verbundscheiben sind Silikatgläser und glasartige Kunststoffmaterialien, wobei Scheiben aus Polycarbonat und Polymethacrylat besonders bevorzugt sind.

Glas- und Kunstglasscheiben sind in beliebiger Anzahl und in beliebiger Form und in beliebiger Kombination einsetzbar. Es sind Kombinationen aus Glas/Glas, aus Glas/Polycarbonat, Polycarbonat/Polymethacrylat und Polycarbonat/Polycarbonat möglich. Auch Verbundscheiben mit drei und mehr, gegebenenfalls unterschiedlichen transparenten Schichten sind zu verwirklichen.

Wenngleich unter den erfindungsgemäßen Verbundscheiben solche bevorzugt sind, deren Zwischenschichten alle vorteilhaften Eigenschaften in sich vereinigen, nämlich gute mechanische Eigenschaften in Kombination mit niedrigem Isocyanatgehalt in einer nur aus zwei Komponenten bestehenden Mischung, so ist es dennoch im Rahmen der vorliegenden Erfindung möglich, neben den Katalysatoren zusätzliche Substanzen einzuarbeiten. So können beispielsweise auch Mischungen aus Polyethern einer Funktionalität von 3 bis 8 in einem Molekulargewichtsbereich von 2000 bis 14 000 verwendet werden. Möglich ist auch der Zusatz von weiteren nieder- und/oder hochmolekularen, mindestens zwei OH- oder NH-Gruppen aufweisenden Substanzen wie z. B. Polyethern, Polyestern, Polycarbonaten, UV- und IR-Absorbern, phenolische Antioxidantien, Lichtschutzmittel, Stabilisatoren oder auch lösliche Farbstoffe bzw. Pigmente, was vorzugsweise als Zumischung zur Komponente b) (in untergeordneten Mengen) erfolgt.

Die folgenden Beispiele geben jedoch nur bevorzugte Ausführungsformen wieder, ohne dadurch die Erfindung einzuschränken.

## Ausführungsbeispiele

### Beispiel 1

Zwischen zwei Silikatglasscheiben, welche an drei Seiten abgedichtet sind, werden mittels einer Zweikomponenten-Dosiermaschine 111 Teile Isophorondiisocyanat und 1000 Teile eines auf Trimethylolpropan gestarteten Propylenoxidpolyethers eines Molekulargewichts von 3000, welcher 0,3% Zinn-II-octoat enthält, dosiert. Nach einstündigem Stehenlassen bei Raumtemperatur war die Gießmasse zu einer klaren, farblosen Zwischenschicht ausgehärtet.

| | |
|---|---|
| Kennzahl: | 100 |
| Shore-A-Härte: | 38 |
| Diisocyanatanteil: | 10,0 Gew.-% |

Dieselbe Zwischenschicht kann auch nach der Prepolymermethode erhalten werden. Hierzu werden zunächst 45 Teile Isophorondiisocyanat mit 45 Teilen des Polyethers zu einem NCOgruppenhaltigen Prepolymeren umgesetzt. Ein Teil dieses Prepolymeren wird dann mit vier Teilen des Polyethers zu einer Zwischenschicht vergossen und gehärtet.

### Beispiel 2

Man verfährt wie in Beispiel 1 angegeben, setzt jedoch anstelle von 111 Teilen 128 Teile an Isophorondiisocyanat ein.

| | |
|---|---|
| Kennzahl: | 115 |
| Shore-A-Härte: | 41 |
| Diisocyanatanteil: | 11,3 Gew.-% |

### Beispiel 3

Gemäß der in Beispiel 1 angegebenen Methode wird ein Gemisch aus 111 Teilen Isophorondiisocyanat und 2000 Teilen eines auf Trimethylolpropan gestarteten, zu 82% aus Oxypropylen- und zu 18% aus Oxyethylen-Einheiten aufgebauten Polyoxyalkylen-Polyethers eines Molekulargewichts von 6000, katalysiert mit 0,2% Zinn-II-octoat gegossen. Die Aushärtung der Zwischenschicht bei Raumtemperatur war nach 2 Stunden beendet.

| | |
|---|---|
| Kennzahl: | 100 |
| Shore-A-Härte: | 11 |
| Diisocyanatanteil: | 6,1% |

### Beispiel 4

Entsprechend der in Beispiel 1 dargestellten Methode wird zwischen einer Glas- und einer Polycarbonatscheibe ein Gemisch aus 55 Teilen Isophorondiisocyanat und 1000 Teilen eines auf Sorbit gestarteten, zu 87% aus Oxypropylen- und zu 13% aus Oxyethylen-Einheiten aufgebauten Pol·oxyalkylen-Polyethers vom Molekulargewicht 12 000 vergossen. Bei Katalyse mit 0,5% Zinn-II-octoat härtet die Mischung bei Raumtemperatur innerhalb von 2 Stunden aus.

| | |
|---|---|
| Kennzahl: | 100 |
| Shore-A-Härte: | 29 |
| Diisocyanatanteil: | 5,2% |

Beispiel 5

Entsprechend der in Beispiel 1 dargestellten Methode wird zwischen zwei Polycarbonatscheiben ein Gemisch aus 167 Teilen Isophorondiisocyanat und 1000 Teilen eines auf Glycerin gestarteten Propylenoxidpolyethers eines Molekulargewichts von 2000 vergossen. Der Gehalt an Zinn-II-octoat beträgt 0,2%. Nach achtstündigem Stehenlassen bei Raumtemperatur war die Zwischenschicht ausgehärtet.

| | |
|---|---|
| Kennzahl: | 100 |
| Shore-A-Härte: | 43 |
| Diisocyanatanteil: | 6,1% |

Beispiel 6

Entsprechend der in Beispiel 1 dargestellten Methode wird zwischen zwei Glasscheiben ein Gemisch aus 8,4 Teilen Hexamethylendiisocyanat und 100 Teilen eines auf Trimethylpropan gestarteten Propylenoxidpolyethers eines Molekulargewichts von 3000, welches 0,2% Zinn-II-octoat enthält, dosiert. Nach zweistündigem Stehenlassen bei Raumtemperatur war die Gießmasse zu einer klaren, farblosen Zwischenschicht ausgehärtet.

| | |
|---|---|
| Kennzahl: | 100 |
| Shore-A-Härte: | 42 |
| Diisocyanatanteil: | 7,7% |

**Patentansprüche**

1. Aus mindestens zwei Glas- und/oder Kunststoffscheiben aufgebaute Verbundscheiben mit einer vergießbaren und bei Raumtemperatur aushärtbaren Polyurethan-Zwischenschicht, dadurch gekennzeichnet, daß die Polyurethan-Zwischenschicht aus den Reaktionsprodukten von

a) einem aliphatischen oder cycloaliphatischen Diisocyanat und
b) einem Oxypropylenpolyether eines Molekulargewichtes von 2000 bis 14 0000 mit 3 bis 8 OH-Gruppen, welcher gegebenenfalls bis zu 30 Gew.-% Oxyethylen-Einheiten enthalten kann,

wobei das NCO/OH-Verhältnis 0,8 bis 1,3 beträgt und Zinn-Verbindungen als Katalysatoren neben gegebenenfalls üblichen Zusatzstoffen verwendet werden, besteht.

2. Verbundscheiben nach Anspruch 1, dadurch gekennzeichnet, daß das (cyclo)aliphatische Diisocyanat Isophorondiisocyanat ist.

3. Verbundscheiben nach Anspruch 1, dadurch gekennzeichnet, daß das aliphatische Diisocyanat Hexamethylendiisocyanat ist.

4. Verbundscheiben nach Anspruch 1, dadurch gekennzeichnet, daß die Bildung der Polyurethan-Zwischenschicht durch Katalyse mittels zinnorganischer Verbindungen erfolgt.

5. Verbundscheiben nach Anspruch 1, dadurch gekennzeichnet, daß als Kunststoffscheiben Polycarbonatscheiben eingesetzt sind.

**Claims**

1. Composite panels made up of at least two glass and/or plastic panels and comprising a castable polyurethane interlayer hardenable at room temperature, characterised in that the polyurethane interlayer consists of the reaction products of

a) an aliphatic or cycloaliphatic diisocyanate and
b) an oxypropylene polyether having a molecular weight of 2,000 to 14,000 and containing 3 to 8 OH groups, which oxypropylene polyether can optionally contain up to 30% by weight of oxyethylene units,

the NCO/OH ratio being 0.8 : 1 to 1.3 : 1 and tin compounds being used as catalysts in addition to optionally standard additives.

2. Composite panels according to Claim 1, characterised in that the (cyclo)aliphatic diisocyanate is isophorone diisocyanate.

3. Composite panels according to Claim 1, characterised in that the aliphatic diisocyanate is hexamethylene diisocyanate.

4. Composite panels according to Claim 1, characterised in that the polyurethane interlayer is formed by catalysis using organotin compounds.

5. Composite panels according to Claim 1, characterised in that polycarbonate panels are used as the plastic panels.

**Revendications**

1. Vitres composites constituées d'au moins deux vitres en verre et/ou en matière synthétique avec une couche intermédiaire de polyuréthane apte à la coulée et durcissable à la température ambiante, caractérisées en ce que la couche intermédiaire de polyuréthane est constituée des produits réactionnels:

a) d'un diisocyanate aliphatique ou cycloaliphatique, et
b) d'un oxypropylène-polyéther d'un poids moléculaire de 2.000 à 14.000 avec trois à huit groupes OH et pouvant éventuellement contenir jusqu'à 30% en poids de motifs d'oxyéthylène,

le rapport des groupes NCO/OH étant de 0,8 à 1,3 et en utilisant des composés d'étain comme catalyseurs et éventuellement, en plus, des additifs habituels.

2. Vitres composites suivant la revendication 1, caractérisées en ce que le diisocyanate (cyclo)aliphatique est l'isophorone-diisocyanate.

3. Vitres composites suivant la revendication 1, caractérisées en ce que le diisocyanate aliphatique est l'hexaméthylène-diisocyanate.

4. Vitres composites suivant la revendication 1, caractérisées en ce que la formation de la couche intermédiaire de polyuréthane a lieu par catalyse au moyen de composés organiques d'étain.

5. Vitres composites suivant la revendication 1, caractérisées en ce que, comme vitres en matière synthétique, on utilise des vitres en polycarbonate.